# EUROPÄISCHE PATENTANMELDUNG

(11) **EP 2 154 016 A1**
(43) Veröffentlichungstag der Anmeldung: **17.02.2010**
(21) Anmeldenummer: 08014483.5
(22) Anmeldetag: 14.08.2008
(51) Int. Cl.: B60K 6/44, B60W 10/30, B60H 1/32

(54) **Antriebssystem mit Kühleinrichtung für Hybridfahrzeuge**

(71) Anmelder: Boda, Desider, 71101 Schönaich (DE)
(72) Erfinder: Boda, Desider, 71101 Schönaich (DE)

(57) **Zusammenfassung**

Die Erfindung betrifft ein Hybridantrieb (94) eines Hybridfahrzeugs angetrieben durch ein Verbrennungsmotor (22) und einen Elektromotor (E1) mit einem wegunabhängig und/oder wegabhängig angetriebenen Nebenverbrauchem (150,132,127,151a) deren Kühlflüssigkeit in allen Fahrzeugbetriebsweisen, ihre Wärme abführen können. Sowie ein passendes Kühlverfahren zur Wärmeabfuhr beim Betrieb der Nebenverbraucher Druckluftkompressor (132), Hydraulikpumpen (172) oder Kältemittelkompressoren.

## Beschreibung

### Stand der Technik und Aufgabe

Diesel oder Benzinmotorenhybridfahrzeuge werden als Serien oder Parallelhybridfahrzeuge in unterschiedlichsten Varianten hauptsächlich im PKW Sektor betrieben.

Für den sinnvollen Einsatz eines Hybridantriebes Fahrzeug insbesonders im Nutzfahrzeug welches vielfältigen Einsatzbedingungen genügen muss, ist eine intelligente Anordnung und Betrieb von Nebenverbrauchern hoher Antriebsleistung erforderlich.

Aufgabe ist es eine solche Anordnung und Betriebsweise der Nebenverbraucher für die unterschiedlichen Betriebsarten eines Hybridfahrzeuges zu finden. Deren Dauerbetrieb mit maximal möglicher Energieeinsparung zu gewährleisten.

Gelöst wird die Aufgabe durch die sinnvolle Betriebsweise und Kühlung der Nebenverbraucher.

Desweiteren werden Maßnahmen aufgezeigt welche es ermöglichen die Verlustleistung der Nebenverbraucher und damit die Wärmemenge zu reduzieren.

### Figuren:

Figur 1 Fahrzeugarchitektur mit Transportwechselbehälter
Figur 2 Steckereinrichtung für Transportwechselträger
Figur 3 Fahrzeugarchitektur mit Steuereinrichtungen
Figur 4 Fahrzeugarchitektur mit Steuereinrichtungen
Figur 5 Fahrzeugantrieb mit Einspritzgasmotor
Figur 6 Fahrzeugantrieb mit Sauggasmotor
Figur 7 Antrieb mit Nebenabtrieb als Schaltgetriebe
Figur 8 Antrieb mit Nebenabtrieb mit stufenloser Übersetzung
Figur 9 Antrieb mit Nebenabtrieb als Doppelkupplungsgetriebe
Figur 10 Antrieb mit Kühl - und Filtereinrichtung

### Bezugszeichenliste

- 1.: Elektrisches Getriebesteuergerät (ETC)
- 2.: ABS/EBS Steuergerät
- 3.: Stabilitätsregelung ESP
- 4.: Querbeschleinigungssensor
- 5.: Lenkwinkelsensor
- 6.: Lenkungssteuergerät
- 7.: Tachograph (Tacho)
- 8.: Dämpfersteuerung (elektrisch)
- 9.: Gate Way Steuergerät
- 10.: Hybridantriebssteuergerät
- 11.: Radbremse
- 12.: Bremsscheibe 1- oder 2 - Scheibig mit und ohne Lüftungsschlitzen (optional axial verschiebbar)
- 13.: Bremssattel (optional axial verschiebbar)
- 14.: Raddrehzahlsensor
- 15.: Motordrehzahlsensor
- 16.: Getriebedrehzahlsensor
- 17.: Feststellbremse
- 18.: Handbremsgeber HBG (3Stellungsgeber)
- 19.: Gangvorwahlgeber
- 20.: Betriebsvorwahlgeber
- 21.: Motorbremsgeber (Dauerbremse)
- 22.: Verbrennungsmotor
- 23.: Gaspedal
- 24.: Handgassteller
- 25.: Kupplungspedal
- 26.: Bremspedal
- 27.: Rückschlagventil
- 28.: Betriebsbremsfeststellbremskombimodulator
- 29.: Betriebsbremsmodulator
- 30.: Anhängersteuerventil (Modul)
- 31.: Kupplungskopf Anhängersteuerung
- 32.: Kupplungskopf Anhängerdruckluftversorgung
- 33.: Feststellbremsaktuator (Federspeicherzylinder)
- 34.: Bremsscheibe
- 35.: Infrarotsensor
- 36.: Parkhilfesensor
- 37.: Radarsensor
- 38.: Ultraschallsensor
- 39.: Lenkrad
- 40.: Lenksäule
- 41.: Kühlgasventileinrichtung
- 42.: Flüssigkraftstofftank
- 43.: Gasstecker
- 44.: Gassteckerventil
- 45.: Akkustecker
- 46.: Akkusteckersichung
- 47.: Batterie (Niedervoltstromversorger)
- 48.: Aufbaudiagnoseinheit
- 49.: Ladebordwand
- 50.: Serieller Datenaustausch CAN/LIN (Datenaustausch)
- 51.: Gastank
- 52.: Zusatzgastank
- 53.: Fahzeugakku
- 54.: Aufbauakku
- 55.: Kühlanlage
- 56.: Klimaanlage
- 57.: EEC Verbrennungsmotorsteuergerät
- 58.: Flüssigkraftstofteinspritzventil
- 59.: Rail Flüssigkraftstoffversorgung (entfält bei Pumpe düse dort uss der pumpennocken abgeschaltet werden oder ein Rücklaufbypassleitung geöffnet werden bei Gasbetrieb)
- 60.: Luftmassenmesser
- 61.: Ansaugluftfilter
- 62.: Drosselklappenpotentiometer
- 63.: Drosselklappensteller
- 64.: Saugluftkompressor
- 65.: Nockenwellengeber
- 66.: Nockenwellenversteller (Nocken Hub und oder Drehwinkel)
- 67.: Mini-Turbodaderverdichter
- 68.: Haupturboladrverdichter
- 69.: Waste Gate Ventil
- 70.: Miniturboladerturbine
- 71.: Hauptturboladerverdichter
- 72.: Abgasrückführventil (AGR)
- 73.: Ladeluftkühler
- 74.: Lambdasonde
- 75.: Abgastemperatursonde
- 76.: NOx Sonde
- 77.: Hauptkatalysator
- 78.: Nebenkatalysator
- 79.: Rußfilter
- 80.: Rußfilterreinigungsanlage
- 81.: Gaseinspritzventil (elektrisch)
- 82.: Gaseinspritzdüse
- 83.: Gasrail
- 84.: Gasmotorsteuergerät (GMS)
- 85.: Gasdruckregler
- 86.: Druckreglerheitzung
- 87.: Gastemperatursensor
- 88.: Gasdrucksensor
- 89.: Einfüllstutzen für Erdgas und Flüssigkraftstoff
- 90.: Kombi-Energiefüllstandsanzeige
- 91.: Erdgastank absperrventil
- 92.: Zundkerze
- 93.: Glühkerze
- 94.: Hybridantrieb
- 95.: Hybridsteuergerät
- 96.: Akkustromsensor
- 97.: Akkuspannungssensor
- 98.: Akkuabschaltrelais
- 99.: Batteriestromsensor
- 100.: Batterieabschaltrelais
- 101.: Gleichspannungswandler
- 102.: Wechselrichter
- 103.: Externer Laderegler
- 104.: Verbrennungsmotorenkupplung K1
- 105.: K1 Kupplungssteller KS1
- 106.: Getriebekupplung K2 (dem Abtrieb/Differential zugeordnet)
- 107.: K2 Kupplungssteller KS2
- 108.: Getriebesteller GS1 Übersetzungsauswahl
- 109.: Wegsensor für Getriebesteller
- 110.: Getriebesteller Vorgelegegruppe GS2
- 111.: Getriebesteller Rückwärtsgang GS3
- 112.: Synchronschalteinrichtung
- 113.: Elektromotor/Generator E2
- 114.: E2 Motorstrom und Temperatursensor
- 115.: E1 Motorstrom und Temperatursensor
- 116.: Übersetzungsgetriebe
- 117.: Differential
- 118.: Differentialsperre
- 119.: PIV-Getriebe
- 120.: Motorkühlkreislauf
- 121.: Hybridgetriebekühlkreislauf
- 122.: Thermostat
- 123.: Temperatursensor
- 124.: Nebenabtrieb
- 125.: Nebenabtriebsregeleinrichtung
- 126.: Nebenabtriebskupplung
- 127.: Lenkhilfepumpe
- 128.: Lenkhilfepumpenregelventil
- 129.: Lenkhilfepumpenbeeinflussungsventil
- 130.: Lenkhilfepumpenkupplung (optional/ kann auch als Synchonisationsschalteinrichtung realisiert sein
- 131.: Bremskraftunterstützungseinheit
- 132.: Druckluftkompressor
- 133.: Ansaugstutzen
- 134.: Druckstutzen
- 135.: Ventilsteueranschluss
- 136.: Ventilsteuereinrichtung
- 137.: Kompressorregeleinrichtung
- 138.: Druckluftkompressorverdichtungsraum
- 139.: Druckluftkompressorverdichtungswand
- 140.: Mechnischer Antrieb (Zahnrad oder Riemen oder Kette) für Kompressor oder Lenkhilfepumpe
- 141.: Ablassventil mit Überdruckventil
- 142.: Trockner und Filter
- 143.: Filterregenerationseinrichtung
- 144.: Systemdrucksensor
- 145.: Systemrückschlagventil
- 146.: Druckbergrenzereinrichtung
- 147.: Sperrventil für die Feststellbremsanlage
- 148.: Druckbehälter
- 149.: Kurbelwelle
- 150.: Nebenverbraucher
150a Kühlmittelpumpe
150b Steuerleitung
- 151.: Getriebeschmierpumpe
- 151a: wegabhängiger Nebenverbraucher
- 152.: Getriebeeingangswelle
- 153.: Getribeausgangswelle
- 154.: Schaltwelle 1
- 155.: Schaltwelle 2
- 156.: Synchronisierungseinrichtung
- 157.: Zahnradpaar
- 158.: Temperatursensor
- 159.: Ventil
- 160.: Elektrischer Lüfter
- 161.: Kühler
- 162.: Motorkühler
- 163.: Getriebekühler
- 164.: Motorthermostat
- 165.: Hybridthermostat
- 166.: Drossel "D"
- 167.: Motorkühlerventilator
- 168.: Thermostat "T1"
- 169.: Thermostat "T2"
- 170.: Hochtemperaturkreislauf "HT"
- 171.: Niedertemperaturkreislauf "NT"
- 172.: Hydraulikpumpe
- 173.: Kühlmittelpumpe "Kp1"

### Beschreibung des Antriebs und der Nebenabtriebsankopplung und dessen Betriebsverfahren :

Nebenverbraucher sind zum Beispiel Notlenkungspumpen für Zweikreislenkungen und können bei dieser Anordnung auch vom Elektromotor E1 22a des Fahrantriebes 94 angetrieben werden, insbesonders dann wenn das Fahrzeug elektrisch fährt oder in einem Mischbetrieb.

Der Verbrennungsmaschine 22 und der Elektromotor 22a treiben im Mischbetrieb dem sogenannten Boosten zum Beispiel beim Überhohlvorgang das Fahrzeug an.

IM Stop und Go betrieben wird hauptsächlich elektrisch gefahren und gebremst durch den Einsatz der Elektromotoren 22a wird der Verbrennungsmotor wird abgeschaltet und die Nebenverbraucher durch den Elektromotor 22a angetrieben.

Auch bei defektem Verbrennungsmotor kann so ein Fahrzeug noch mit Lenkhilfeunterstützung abgeschleppt werden. Da die Lenkhilfepumpe 127 Über den Elektromotor E1 22a noch antreibbar sein kann.

Insgesamt kann auch der Fahrantrieb eines solchen Fahrzeugs mit dem Elektromotor E1 bei geöffneter Verbrennungmotorenkupplung K1 unterstützt werden da auch die Betriebs und Feststellbremse im Fehlerfall des Verbrennungsmotor unterstütz wird oder dies nun eine Pneumatische betrieb und Feststellbremse eine hydraulische oder eine elektrisch betätigte Betriebs und oder Feststellbremse ist (dann wird die Energie zum Betätigen der Bremse aus dem Fahrakku gezogen). In einem solchen Notbetrieb kann auch ein Kühlklimaanlage oder sonstige wichtige Aufbaukomponennten aus dem Fahrakku zumindest notbedürftig mitversorgt werden, da z.B.: dann das geladenene Kühlgut nicht verdirbt.

Es kann auch vorgesehen sein dass ein zusätzlicher Generator außen am Getriebe angeflanscht wird der über einen der Elektromotoren vorzugsweise den Hauptelektromotor E1 angetrieben wird zB bei stehendem Fahrzeug. Dies ermöglicht einen Betrieb eines Standartkühlmittelaggregates mit dort eingebauten Kältekompressor bei Nutzung von vorhandener Installation am Kühlmittelaufbau.

Zusätztlich kann durch eine Kupplung der Nebenabtrieb bei Verwendung zB einer Hebebühne oder einer Drehleiter abgeschaltet bzw. abgekuppelt werden ein schließen der Nebenabtriebskupplung 126 ist dann nur möglich wenn das Fahrzeug steht bzw. über ein elektrisches oder pneumatisches Signal der Handbremse und oder des Tachographen und/ oder der Drehzahlsensoren des ABS/EBS sichergestellt ist dass das Fahrzeug steht. Die Kupplung kann von einer dem Getriebe zugeordneten Hydraulikpumpe erfolgen welche hier die Möglichkeit hat von dem Elektromotor E1 angetrieben zu werden bei göffneter Kupplung zum Verbrennungsmotor und geöffneter Kupplung zum Differential bzw. durch das Schaltgetriebe geöffnetem Triebstrang zum Differential . Die Nebenabtriebskupplung wird vorzugsweise von einer Hydraulikhochdruckpumpe betrieben also eine Verdrängerpumpe zB eine Kolben, Zahnrad, Zahnradsichel oder Flügelzellenpumpe welche wiederum vom Hybridelektromotor angetrieben werden kann. Die Schaltung funktioniert derart, dass die Kupplung des Nebenabtriebs im stromlosen oder im Fehlerfall automatisch geöffnet wird indem ein Magnetventil durch eine Feder zurückgestellt die Druckschaltkammer des Kupplung drucklos macht wodurch keine Normalkraft mehr auf die Reibbeläge ausgeübt wird, also kein Drehmoment mehr übertagbar ist. Diese pumpe kann auch zusätzlich die Versorgung der Steuerung (Stellzylinder) der Getriebesteller übemehmen. Die Kupplung ist Dabei vorzugsweise als nasse Mehrscheibenkupplung ausgeführt da diese dann mit dem Nebenabtrieb unter/oder dem Überset-zunggetriebe 108a in einem Gehäuse untergebracht sein kann.

Desweiteren kann durch ein Steuerverfahren sichergestellt sein, dass die Nebenverbraucher erst zugeschaltet wirden wenn hinreichend Strom im Fahrakku vorhanden ist der einen hinreichenden Betrieb des Nebenverbrauchers sicherstellt. Dabei wird eine Akkustrom und oder Spannungmessung durchgeführt. Desweiteren kann der Nebenverbraucher zeitlich verzögert nach dem Anlassvorgang der Brennkraftmaschine im Stop und Go Betrieb zugeschaltet werden oder bei elektrischem Fahrbetrieb mit dem E-Motor E1 nachdem der Anfahrvorgang abgeschlossen ist also das Nennfahrmoment verreicht ist.

Übersteigt das Drehmoment bei Zuschaltung das programmierte zulässige Drehmoment der insgesamt installierten Antriebsmaschinen, so kann falls dies vom Fahrer mit einem Schalter erlaubt wurde, der Verbrennungsmotor automatisch gestartet und zugeschaltet werden. Das Verbrennungsmotorstartermoment wird dabei mitberücksichtigt indem diese V-Motorstartleistung durch Reduktion der Nebenverbraucherleistung (zB Drehzahlreduzierung der Kehrmaschinenwalze und/oder des Saugmotors) oder durch vorzeitiges starten indem die Starterarbeit einfach vom der noch vorhandenen gespeicherten Batteriearbeit abgezogen wird.

Für alle Kupplungen des Triebstrangs bzw. Antriebes insbesonders K1 (Verbrennungsmotorseitig) und/oder K2 Differentialseitig und auch die Nebenabtriebskupplung gilt.

Dass diese als Mehrscheibenkupplung in gezogener oder gedrückter Ausführung betreiben werden kann sie können nass oder trockenlaufend sein und als Mehrscheibenkupplung ausgeführt werden. Es können auch kegelige Ausführungen zu Reduktion der Anpresskräfte denkbar sein.

Die Kupplung K2 kann auch durch eine Synchronschalteinrichtung realisiert sein.

Vor der Kupplung K1 kann dem Verbrennungsmotor zugeordnet auch ein Torsionsdämpfer zugordnet werden, der dann positiv auch auf den Nebenverbraucherabtrieb wirkt und außerdem ein Betrieb der E1 -22a Elektromaschine insofern erleichter als dass der elektrische Phasen- und Drehzahl-Umrichterbetrieb einfacher ist und weil die Drehmomentoberschwingungen die Stromkonvertierung des E-Motors nicht behindern. Für die NebenabtriebsKupplung126 gilt zusätzlich dass diese Nebenabtriebskupplung als formschlüssige Kupplung z.B.: Klauenkupplung wie bei einer Differentialsperre) ausgeführt sein kann.

Der Betrieb des Kompressor zur Bremse an einem der durch Elektromotor

E1 -22a angetriebenen Nebenabtriebsmöglichkeiten hat zudem den Vorteil dass die pneumatische Gefiebeschaltung insbesonders die pneumatischen Schaltzylinder die für das Schalten unterschiedlicher Übersetzungen auch im Abschleppbetrieb angetrieben durch E1 noch mit Druckluft versorgt werden kann. So ist eine pneumatisches Kupplungsbetätigen K1 oder K2 und ein Umschalten oder ein Leerlauf einlegen im Getriebe noch möglich. Es kann auch vorteilhaft sein dass direkt von dem am Getriebe dem E-Motor E1 zugeordneten montierten Kompressor vom druckluftstutzen abgezweigt und über ein Rückschlagventil oder Überströmventil abgesichert die Luft zur Versorgung des Getriebes entnommen gekühlt, entwässert und gefiltert wird. Die Statoren der Elektromotoren sind mit Wasser aus dem Kühlwasserkreislauf des Verbrennungsmotors gekühlt, dabei kann ein Ventil oder eine Thermostat derart eingebaut sein , dass der v-Motorkühlkreislauf erst für den Elektromotorkühlreislauf geöffnet wird wenn der V-Motor seine Betriebstemperatur erreicht hat.

Desweiteren kann bei stehendem Fahrzeug die komplette Druckluftanlage mit dem Druckluftkompressor 132 gefüllt werden angetrieben von dem Elektromotor E1 22a bei noch abgeschaltetem Verbrennungsmotor 22.

Ein Tempertursensor (Es kann auch ein Thermostat sein) misst die im Elektromotorenkühlkreislauf vorhandene Temperatur und Schaltet auch bei stehendem Verbrennungsmotor auch den großen Kühlkreislauf HAT 170 um wenn der Elektromotor 22a eine maximal zulässige Temperatur erreicht hat, so ist insbesonders auch im rein elektrischen Betrieb des Fahrzeugs und oder der Nebenverbraucher über zumindest eine der elektrischen Antriebsmotoren ein Dauerbetrieb möglich.

Insbesonders können auch die Nebenverbraucher mit Kühlflüssigkeit gekühlt werden.

So ist es hilfreich eine Druckmittelpumpe ( Kompressor oder Hydraulikpumpe) zur Bremskraftunterstützung und /oder eine Lenkhilfepumpe mit dem Kühlkreislauf des Antriebs zu verbinden.

Dabei können die Kühlmittel für den Fahrbetrieb erforderlichen Nebenherbraucher derart mit dem Kühlkreislauf des Antriebs verbunden werden, dass eine Wärmeabfuhr möglich ist.

Dies kann durch direktes verwenden der gleichen Kühlflüssigkeit von 22 oder 22a geschehen und/oder durch Zwischenschalten eines Wärmetauschers zwischen dem Kühlkreislauf 22 und/oder 22 a geschehen.

Desweiteren können aktive Mittel bestehend aus Thermostaten 168 bzw. 169 elektrischer oder mechanischer Bauart verwendet werden um die Wärmezufuhr zum Antrieb 94a zu regeln und/oder zu begrenzen.

Es können aber auch passive Mittel zum Einstellen der maximalen Wärmezufuhr zum Kühlkreislauf des Antriebs verwendet werden z.B.: Drosselventile.

So ist es zB auch hilfreich dass z.B.: ein zusätzlicher am Nebenabtrieb angetriebener Generator und/oder eine Hydraulikpumpe mit dem Kühlkreislauf des Fahrzeugs verbunden ist.

Dabei kann die wärme

Insbesonders dann wenn was bei einem Solchen Fahrzeug möglich ist Der Fahrakku über die Steckdose an z.B.: einer Baustelle über ein Ladegerät nachgeladen wird und der Kran oder Hebebühnenbetrieb Über einen der im Triebstrang des Fahrzeugs installierten Nebenverbraucher sichergestellt wird.

### Bauliche Anordnung und Ausführung.

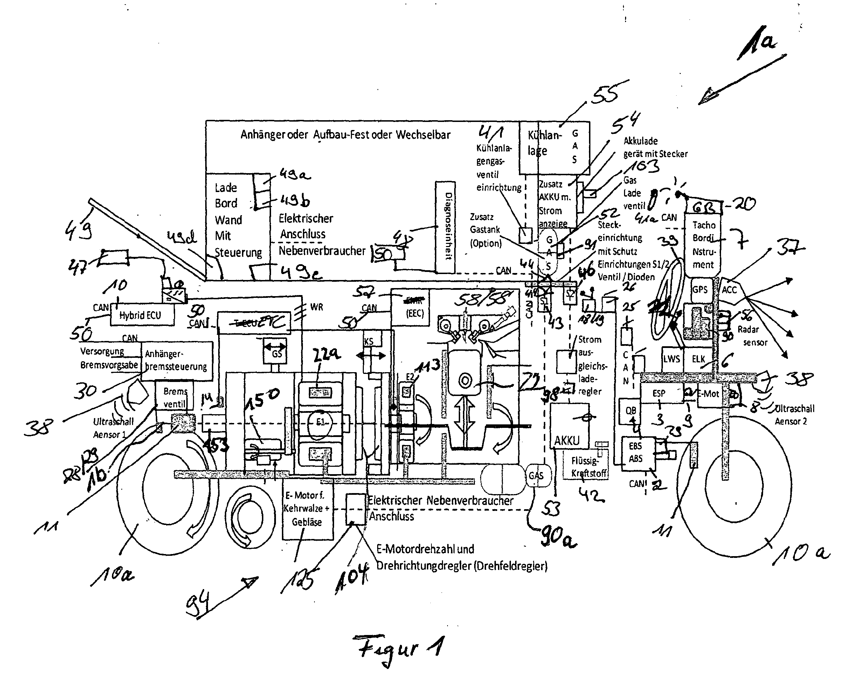

Der Druckluftkompressor 132 und die Lenkhilfepumpe 127 und/ oder der weitere freie Nebenabtrieb 150 ist zwischen der automatischen Schaltgetriebegruppe 108a und der Kurbelwellenkupplung angeordnet. Langsam fahrende Fahrzeuge ohne Wandler haben vor der Getriebeauswelle 154 noch eine Feste Stufenübersetzung, in Figur 1 als schaltbare Planetenstufe Dargestellt.

Idealerweise ist er mit dem E1 Motor direkt verbunden über einen räder und /oder Riementrieb um eine Übersetzung und einen Achsversatz zu realisieren.

Die Übertragung des Drehmomentes kann über Kegelräder geschehen wobei die Abtriebswellen dann senkrecht zur Getriebeachse stehen .

Die Übertragung kann über einen Riementreib erfolgen und/oder über einen Stimradsatz welcher auch als Teilumlaufgetriebe ausgebildet sein kann

Da Druckluftkompressor und Lenkhilfepumpe für den Fahrbetrieb gebraucht werden diese Nebenverbraucher bedarfsabhängig elektrisch und/oder pneumatisch oder hydraulisch zusätzlich gesteuert.

Alle Nebenabtriebe und damit Verbraucher dieser Anordnung können optional auch mittels einer pneumatisch oder hydraulisch ausrückbarer Kupplung vom Elektromotor E1- 22a einzeln oder paarweise abgekuppelt werden.

Beispielhaft sind solche Anordnungen bei Dnickluftkompressoren bekannt. Im Falle einer hydraulisch betätigten Nebenverbraucherkupplung 126 wird diese von einer Pumpe welche vom Getriebeölsumpf gespeist wird und diese wiederum vorteilhafterweise durch den Elektromotor E1- 22a angetrieben wird.

Die Verwendung eines Elektromotors zum Ausrücken einer der Kupplungen 149 bzw. 126 ist auch denkbar.

Die Einheiten LHP 127 und Kompressor 132 können auch zusammengefasst in einem Zwischenelement sein. Hilfreich ist dabei die Verwendung einer Lenkhilfepumpe (LHP) auf Basis einer Zahnrad oder Lamellenpumpe welche schmal bauen.

Insbesonders müssen derartige Nebenverbraucher und deren erzeugtes Druckmittel gekühlt werden.

So muß z.B.: ein Druckluftkompressor 132 mit Kühlflüssigkeit gekühlt werden. Er zahlt wie die Lenkhilfepumpe 127 zu den wegunabhängig anzutreibenden Nebenverbrauchem welche zwischen der Kupplung K1 104 und dem Getriebebereich mit wechselbarem Übersetzungsverhältnis angesiedelt ist.

Desweiteren zählen hierzu große Hydraulikpumpen zum Betreiben von Betonmischem Müllfahrzeugen oder Kranfahrzeugen.

Kranfahrzeuge werden z.B auch stationär betrieben und dabei kann der Fahrakku zusätzlich auch zusätzlich aus einer stationären Drehstromsteckdose nachgeladen werden.

Wegabhängig anzutreibende Nebenverbraucher sind zum Beispiel Kehrwalzen, Streugeräte, Mähwerke, Baumaschinen Nebenantriebe wie z.Beispiel für den betrieb von Erdaufreißgeräten.

Diese werden bei kleiner Fahrgeschwindigkeit betrieben und können Antriebsleistungen von bis zu 50KW fordern, die maximale Temperatur des Nebenantriebs muss durch Kühlung der Aggregate und des von Ihnen geförderten Druckmittels geregelt werden. Bei Überschreiten einer dem einzelnen Kühlkreislauf als maximal vorgegebenen Temperatur öffnen die Termostatventile T2 bzw T1 um mehr wärme abführen zu können indem ein weiterer kühlkreislauf zugeschaltet werden kann.

Für zusätzliche einkoppelbare Nebenverbraucherkühlungen müssen Schalt bzw. Absperrventile V welche in Abhängigkeit von den Messwerten von Temperatursensoren TE gesteuert werden.

Die Druckmittel einiger dieser Nebenverbraucher 132,127 , 150, 151a werden meist gefiltert und im Falle das Druckmittel Luft ist wird diese auch noch zusätzlich im Trockner 142 getrocknet.

Filter erzeugen im Falle sie verschlissen oder verstopft sind hohen Staudruck und zusätzliche Druck und Energieverluste und zusätzliche Wärmeverluste. Im schlimmsten Falle kann es zur Zerstörung einer Anlage durch zum Beispiel Bruch einer Druckleitung kommen.

Deshalb ist es vorteilhaft solche Filter zu überwachen und regelmäßig, zumindest in Abhängigkeit der geförderten Druckmittelmenge zu spülen oder gar zu regenerieren.

Zur Ermittlung der Gesamtförderzeit muß dann beim Hybridantrieb die Antriebszeit durch den Elektromotor 22a und die Antriebszeit des Nebenverbrauchers der Verbrennungsmaschine zusammengezählt werden. ZB im Stop und Go Betrieb im Stadtverkehr da wechseln beide Antriebsarten Elektromotor und Verbrennungsmotor sich häufig ab.

Die Anzahl der Umdrehungen mit der der Nebenverbraucher durch die Verbrennungsmaschine angetrieben wird, wird durch einen Sensor am Verbrennungsmotor vorzugsweise dem Motordrehzahlsensor 15 vorgegeben und anderen Steuergräten z.B.: der Kompressorregeleinrichtung elektrisch in serieller Datenform übermittelt.

Die Anzahl der Umdrehungen mit der der Nebenverbraucher durch den Elektromotor E1 22a angetrieben wird durch das Hybridsteuergerät welches den Stromumrichter bzw. Wechselrichter steuert ermittelt und auf dem CAN/LIN Bus in serieller Datenform der Kompressorregeleinrichtung zur Verfügung gestellt.

Unter Berücksichtigung des Übersetzungsverhltnisses des Nebenverbrauchers zum jeweiligen Antriebsmotor (Elektromotor, Verbrennungsmotor) und des spezifischen Fördervolumens welches Abhängigkeit der Drehzahl und oder der Temperatur in einem der Steuergeräte abgespeichert ist. Lässt sich die Gefilterte Luftmenge errechnen und die länge des erforderlichen Regenerier oder Spülzyklus angeben.

Elektrisch betätigbare Spül und oder Regenerierventile sind meist parallel zu Rückschlageventilen angeordnet welche die Druckabsicherungsaufgabe des im Behälter B gespeicherten Druckes haben.

Der Behälter kann z.B.: ein Hydraulikspeicher oder ein Druckluftbehälter sein.

Bei aktivieren des Spül - und/oder Regenerierventils sowie nach abgeschaltetem Nebenverbraucher und damit drucklosem Filter F kann dann Druckmittel aus dem Behälter rückwärts durch das Filter und/oder das Trockenmittel ins freie oder einen Sammelbehälter fließen.

Im Falle der Nebenverbraucher ein Druckluftkompressor ist, so wird er nach erreichen eines Mindestdruckes im Druckmittelbehälter 148 gemessen durch einen Drucksensor welcher dem Rückschlagventil nachgeordnet ist wieder zum Fördern und Druckaufbau eingeschaltet. Die erreichen des maximalen Speicherdruckes wird er wieder abgeschaltet. Im falle einer bergab oder längeren Bremsfahrt wird der Elektromotor E1 als Generator zugeschaltet und im falle der Druck im Druckluftbehälter unter einem gewissen Wert ist wird auch der Kompressor zugeschaltet um das Fahrzeug zu bremsen und den Behälterdruck zu erhöhen.

Allgemein kann diese Anordnung und Verfahrensweise für Hybridgetriebege-Iten deren Übersetzung durch den Einsatz eines stufenlosen Getriebes verändert werden kann oder durch den Einsatz eines hab oder vollautomatischen Schaltgetriebes zu Übersetzungsveränderung verändert werden

Es kann auch ein Doppelkupplungsgetriebe zum verändern der Übersetzung verwendet werden.

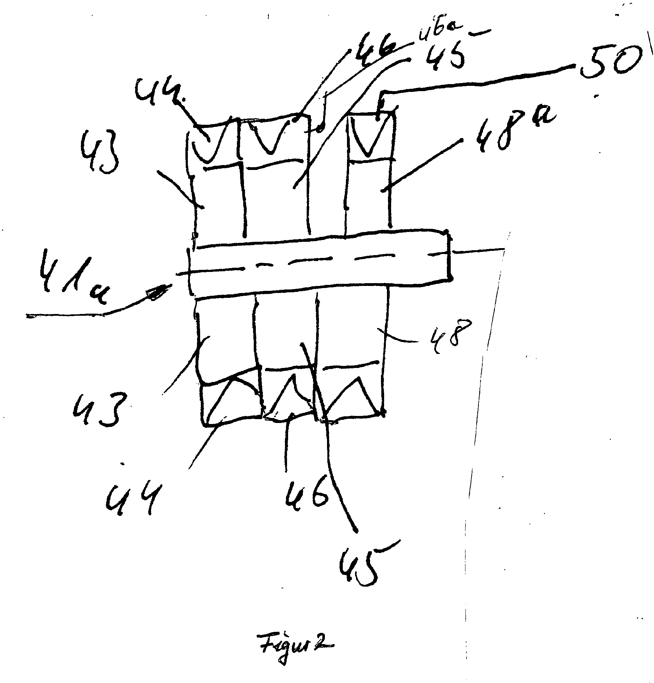

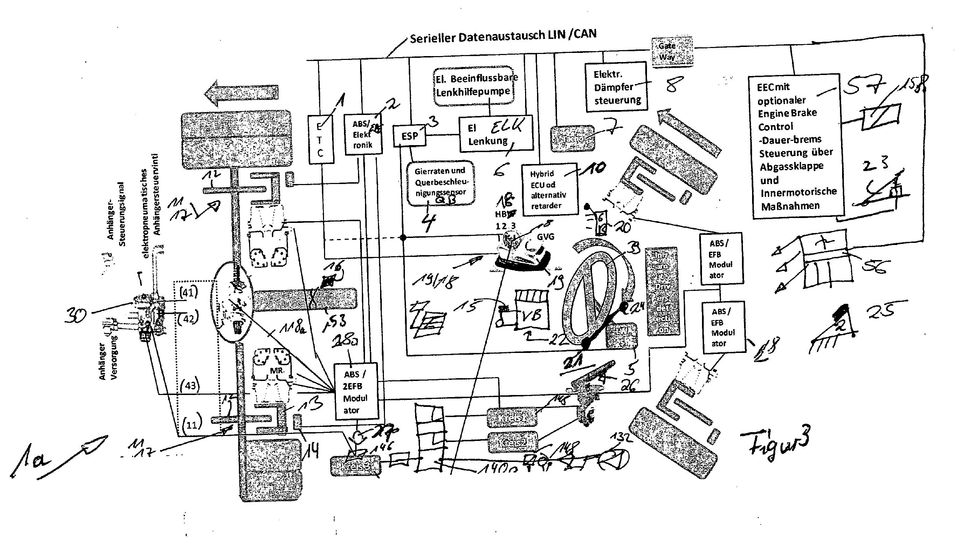

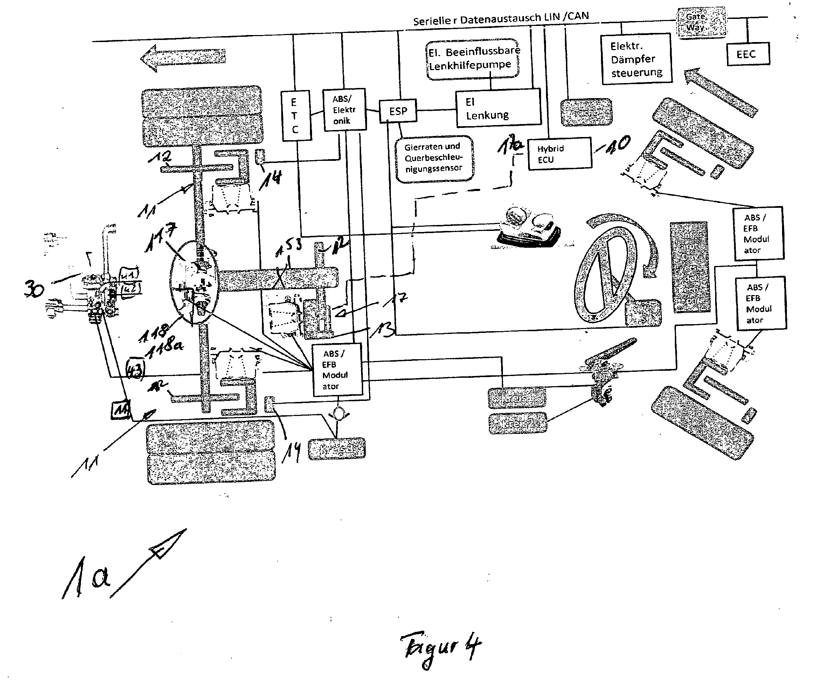

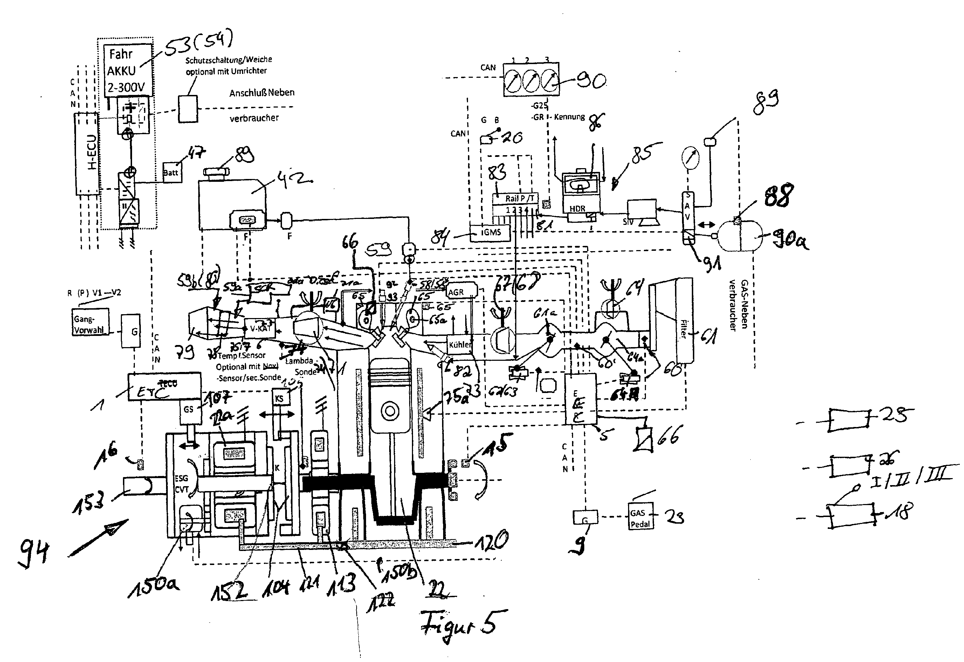

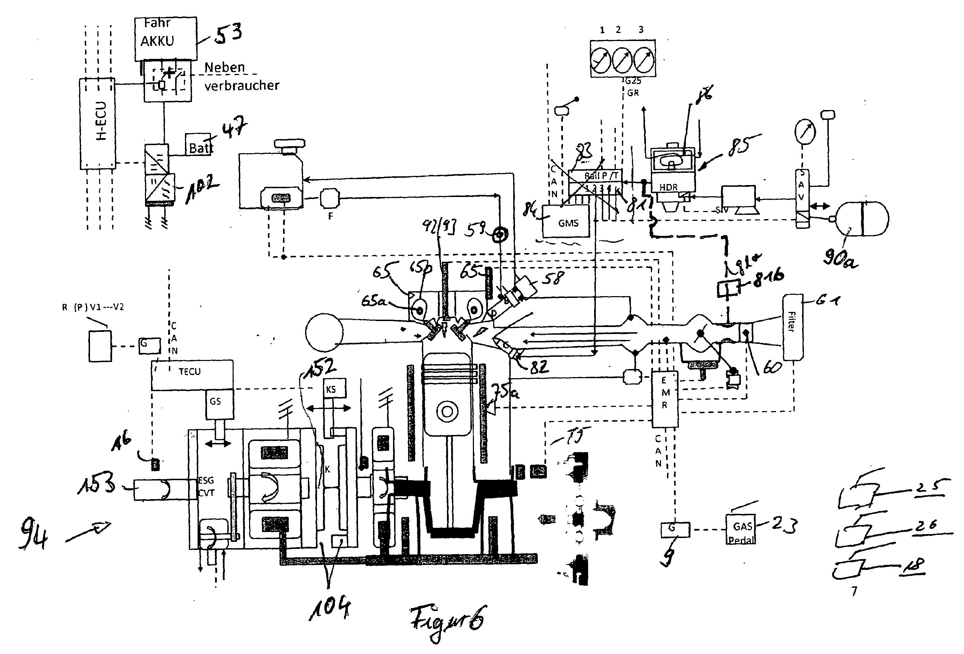

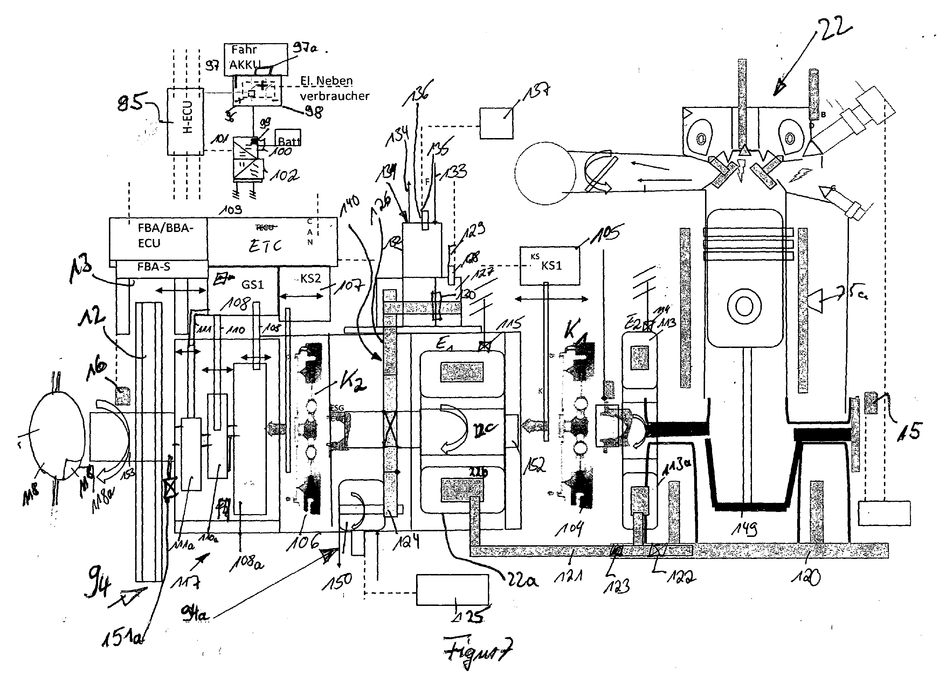

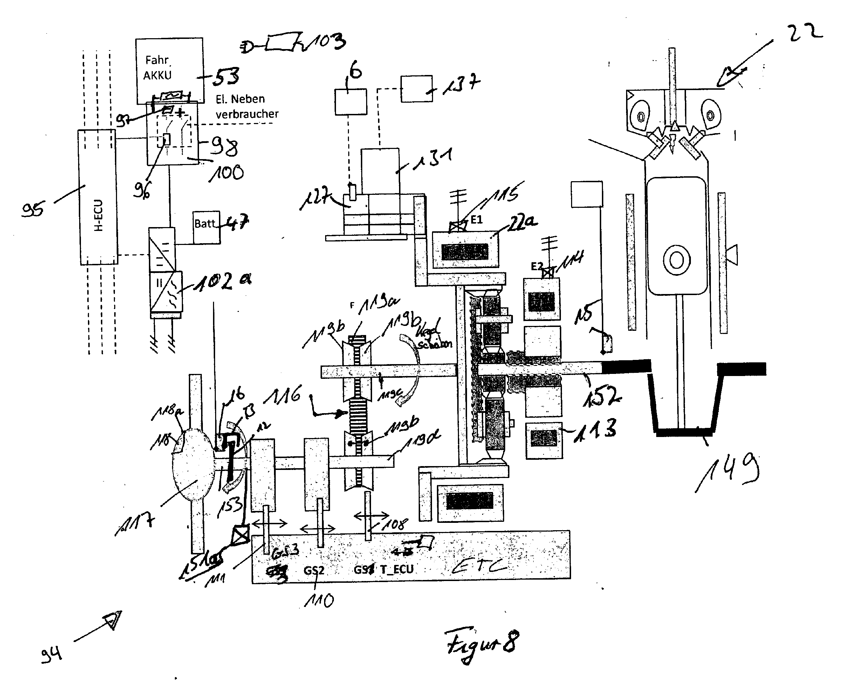

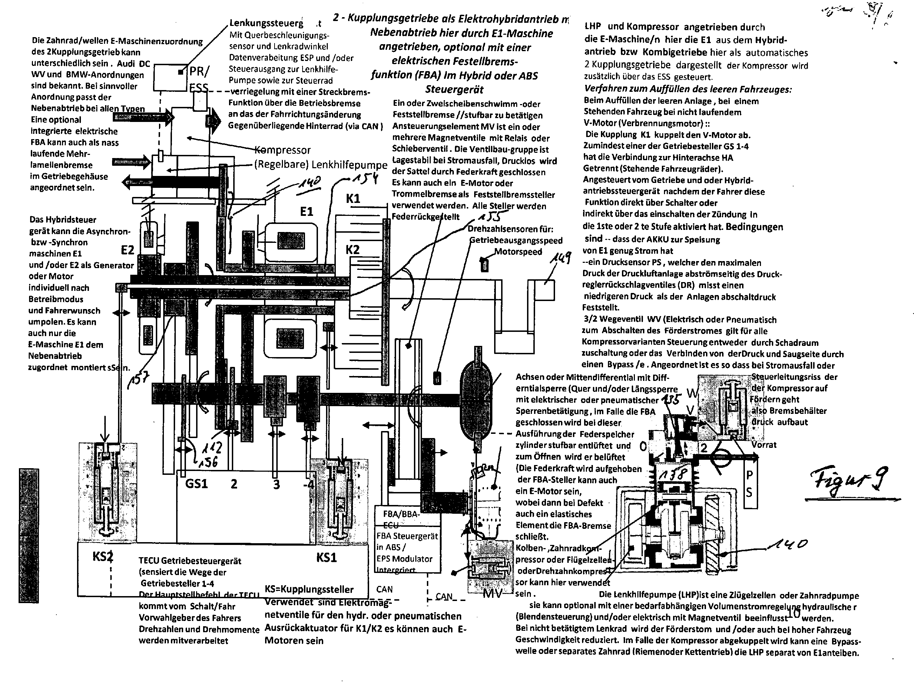

Beschreibung der Figuren 1-9 entspricht den Beschreibungen der Anmeldungen aus der Akte K0012 bzw. K0013

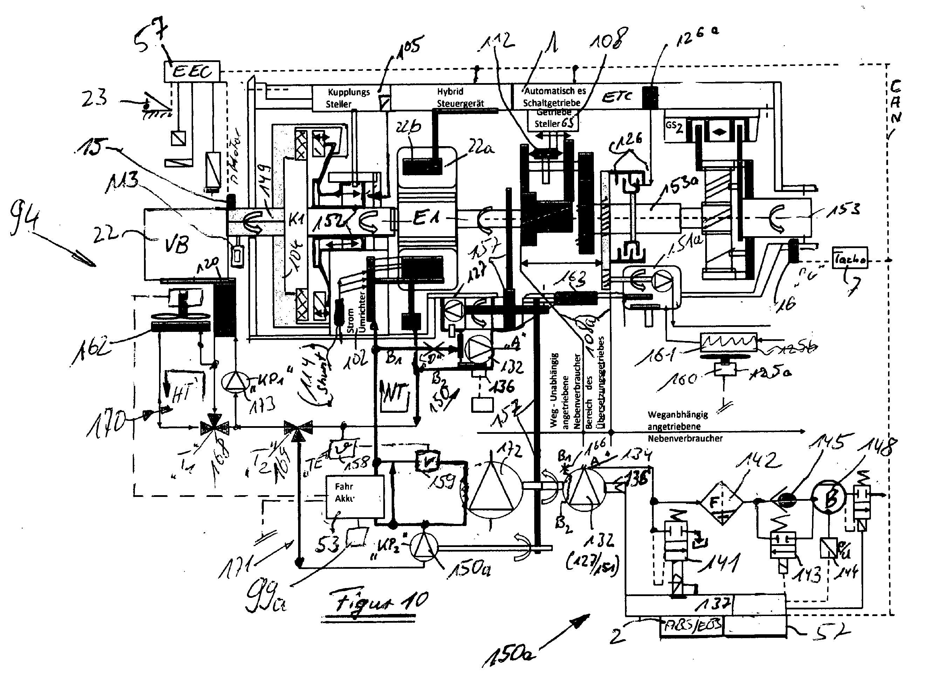

### Beschreibung der Figur 10

Im Falle der Nebenverbraucher 150 ein Druckluftkompressor 132 ist, so wird er nach erreichen eines Mindestdruckes im Druckmittelbehälter 148 gemessen durch einen Drucksensor 144 welcher dem Rückschlagventil 145 nachgeordnet ist wieder zum Fördern und Druckaufbau eingeschaltet, indem die Ventilsteuereinrichtung 136 wieder entlüftet wird .

Die Ventilsteuereinrichtung der Druckluftkompressors besteht aus einem Kolben welcher bei öffnen entgegen einer Federkraft dem Kompressor Hubraum einen Totraum zuschaltet und/oder die Ein- und Auslassventile des Kompressors so schaltet dass kein weiterer Druckaufbau am Druckstutzen134 möglich ist.

Bei Erreichen des maximalen Speicherdruckes wird der Druckluftkompressor dann abgeschaltet.

Im Falle einer Bergabfahrt oder einer längeren Bremsfahrt wenn zum Beispiel Dauerbremse aktiv ist wird der Elektromotor E1 als Generator zusätzlich zum Kompressor zum Bremsen des Fahrzeugs zugeschaltet , falls der Fahrakku 53 noch elektrische Energie aufnehmen darf .

Im Falle der Druck im Druckluftbehälter unter einem gewissen, von der Steuerelektronik bzw. der Kompressorregeleinrichtung 137 gespeicherten Wert fällt dem sogenannten Einschaltdruck, dann wird auch der Kompressor zugeschaltet, um durch das Druckluftkompressordrehmoment das Fahrzeug zu bremsen und den Behälterdruck 148 zu erhöhen.

Im Dauerbremsbetrieb wird der Kompressor jedoch vorzeitig zugeschaltet um dessen Bremsenergie zu vorzeitigen Drucktuftförderung zu verwenden. Diese Vorgehensweise kann vorteilhafterweise für alle Nebenverbraucher die einen Druckspeicher 148 oder einem Hydrauliköldruckspeicher mit einem Systemdrucksensor 144 füllen zutreffen.

Bei Fahrzeugen mit Kühlräumen oder Kühlcontainern wird der Kühlraum als quasi Energiespeicher genutzt. Die Fahrerkabine oder der Fahrgastraum eines Buses kann als quasi Energiesparraum verwendet werden.

Bei Kühlanlagen 55 für Kühlaufbauten oder Kühlanhängem wird dann im Falle der eine Dauerbremsung oder eine Schubphase (Bergabfahrt, Bremsfahrt) vorliegt vorrangig gekühlt, das heißt die Kühltemperaturen werden durch vorzeitiges Einschalten des Kältemittelkompressors in deren absoluten Lage und/oder durch verändern der Ein- und Abschalthysterese beeinflusst und/oder zu kälteren Temperaturen hin verschoben , indem der Kältemitteldruck verändert wird.

Der Druck des Kältemittels kann durch eine elektrische Beeinflussung , also ein Verengen der Kältekreislaufdrossel, vergrößert werden,

Ebenso kann durch die Drehzahlveränderung des Kältemittelkompressors die Kälteleistung und/oder das Kälteniveau zur vorrangigen Nutzung der Verzögerungsenergie einer Bremsphase zum Kühlen genutzt werden.

Im Falle der Klimakompressor elektrisch betrieben wird, der Elektromotor E1 - 22a als Generator in der Bremsphasen betrieben wird und dabei den Akku lädt und /oder zumindest den überschüssigen generierten Strom des Elektromotors 22a direkt zum Elektromotor des Kältekompressors liefert. Wird die Verlustwärme des Fahrakkus 53 wie auch die des Druckluftkompressors 132 auch während der Dauerbremsphase zur Kühlung dem Niedertemperturkreislauf 171 zugeführt.

Um die Verlustwärme des wegabhängig angetriebenen Nebenverbrauchers 151 a, welcher dem Bereich des Übersetzungsgetriebes am Triebstrang nachgeordnet ist einem Kühlkreislauf zuzuführen kann ein Ölkühler 161 vorgesehen sein dessen elektrischer Drehstromlüfter 160 aus den Fahrakku 54 gespeist wird.

Es kann aber auch vorteilhaft sein auf einen solchen Ölkühler zu verzichten und das Ölpumpengehäuse 172 direkt mit Kühlflüssigkeit des Niedertemperaturkreislaufes und/oder des Hochtemperaturkreislaufes zu Kühlen dabei kann ein Temperatursensor 158 die maximal zulässige Temperatur dieses Kühlkreislaufes messen und gegebenenfalls die Literleistung des Förderstromes der Hydraulikpumpe 172 reduzieren und/oder dem Fahrer ein optisches oder akustisches Signal geben damit dieser den Nebenverbraucher 172 abregelt oder abschaltet.

Diese Betriebsweise gilt auch für die Klimaanlagen der Fahrerkabine , hier wird wird die Ein- und Abschalthysterese zur vorrangigen Kühlung während Dauerbremsphasen verändert.

Es kann vorteilhaft sein die Klimaanlage automatisch einzuschalten bei entsprechend hohen Außentemperaturen gemessen wird des durch einen Außentemperaturfühler dessen Signal als serielles Datensignal auf einem Datenbus vorliegt.

Diese Betriebsart des automatischen Einschaltens der Klimaanlage während anliegender Schub- und Bremsphasen kann durch einen elektrischen Schalter vom Fahrer vorgewählt werden.

Es könne zusätzlich Daten vom Navigationsmessgerät verwendet werden um die Kälteanlagen und/oder den Druckluftkompressor zu steuern zumal bei vorheriger Eingabe des Fahrtzieles des Fahrtzieles dann aus den Höhendaten unter Berücksichtigung des aktuellen Fahrzeugstandorts und der Fahrgeschwindigkeit sich Zeitfenster für die Bergab- und Bremsfahrten ermitteln lassen.

Aus dem Kurvenfenster also der Koordinaten in der Ebene lassen sich Daten für die Betriebsweise des Antriebs 94 der Hybridfahrzeugs ermitteln, so kann zum Beispiel der Bremsbetrieb des Fahrzeugs durch vorrangigen Generatorbetrieb von zumindest einem der Elektromotoren 22a bzw 133 zugeschaltet werden.

Vorteilhafterweise kann die Raumtemperatur im nicht spürbaren Bereich um einige Grad Celsius (typisch 1-3 Grad nach unten verändert. werden. Dies geschieht durch gleiche Maßnahmen wie bei Kühlanlagen 55 um Energie einzusparen.

Während des vorrangigen Betriebs der Nebenverbraucher in Schubphasen muß für eine gute Wärmeabfuhr der entstehenden Verlustleistung der Nebenverbraucher (Kältekompressor, Pumpen, Kompressoren) gesorgt werden. Dies kann durch deren Kühlung mit einer Kühlflüssigkeit und Ankopplung deren Flüssigkeitskühlung an den Niedertemperaturkreislauf "NT" 171 und/oder den Hochtemperaturkreistauf "HT" des Antriebs 90 erfolgen.

Der Druckluftkompressor kann ein Drehzahn- oder Schraubenkompressor sein der vorteilhafterweise mit Elektromagnet gesteuert ist, so dass Druckseite und

Saugseite gesteuert miteinander verbunden sind.

## Patentansprüche

1. Hauptanspruch:
Antrieb 94 für ein Hybridfahrzeug 1a, bestehend aus;
- einem Verbrennungsmotor 22
- einem Elektromotor E1 , 22a
- einem Verbrennungsmotorsteuergerät 57
- einem Fahrakku 53
- zumindest einem Übersetzungsgetriebe
- einem mit dem Elektromotor E1 22a antreibbaren Nebenabtrieb 124
**dadurch gekennzeichnet,**
**dass** das Fahrzeug bei abgeschaltetem, stehendem Verbrennungsmotor 22 mit dem Elektromotor E1- 22a bewegt werden kann, und zumindest ein Nebenverbraucher (150,132 ,127,151a) durch ein flüssiges Kühlmittel gekühlt werden kann.

2. Getriebe 94 a dessen angeflanschte, flüssigkeitsgekühlte Nebenverbraucher (127,132,150) bei geöffneter Kupplung 104 durch den Elektromotor 22a antreibbar sind, und deren Kühlmittel dem Hochtemperaturkühlkreislauf "H"-170 und /oder dem Niedertemperturkreislauf "NT" -171 zuführbar ist.

3. Antrieb 94 nach Anspruch 1, **dadurch gekennzeichnet, dass**
das flüssige Kühlmittel zumindest eines Nebenverbrauchers (150. 151.127.132) mit dem Hochtemperaturkühlmittelkreislauf 170 des Verbrennungsmotors 22 verbunden werden kann.

4. Antrieb 94 nach Anspruch 1, **dadurch gekennzeichnet, dass** das flüssige Kühlmittel zumindest eines Nebenverbrauchers (127, 132, 150, 151 a) mit dem Kühlmittelkreislauf des Elektromotors E1 - 22a verbunden werden kann.

5. Antrieb 94 nach einem der vorangegangenen Ansprüche, **dadurch gekennzeichnet, dass** der Nebenverbraucher ein Druckmittelerzeuger zur Bremskrafterzeugung also eine Ölpumpe und oder/ ein Druckluftkompressor ist.

6. Antrieb 94 nach einem der vorangegangenen Ansprüche **dadurch gekennzeichnet, dass** das Kühlmedium durch eine Kühlmittelpumpe KP1 173 und / oder KP2 150a in bewegt wird.

7. Antrieb 94 nach einem der vorangegangenen Ansprüche, **dadurch gekennzeichnet, dass** der Kühlmittelstrom durch einen Thermostaten T1 168 und / oder den Thermostaten T2-169 geregelt wird.

8. Antrieb 94 nach einem der vorangegangenen Ansprüche, **dadurch gekennzeichnet, dass** zumindest eine der Kühlmittelpumpen Kp 1 -173 und/oder Kp2 -150a von einem Elektromotor E1 22a angetrieben werden kann der vom Verbrennungsmotor 22 abgekuppelt werden kann.

9. Antrieb 94, mit einem Kühlmittelkreislauf und einem Nebenverbraucher (127,151a,150), **dadurch gekennzeichnet, dass** das vom Nebenverbaucher 151 a geförderte Druckmittel (Öl) durch einen Ölkühler 125b gekühlt wird und dessen elektrischer Ventilator 125a vom Fahrakku 97 und/oder der Batterie 99a gespeist wird.

10. Antrieb 94, nach einem der vorangegangenen Ansprüche, mit einem Kühlmittelkreislauf, **dadurch gekennzeichnet, dass** weitere Nebenverbraucher 150 angeordnet werden können deren Wärmeabfuhr durch ein zusätzliches elektrisch betätigbares Ventil "V" gesteuert werden kann.

11. Antrieb 94, nach Anspruch 9, **dadurch gekennzeichnet, daß** das Ventil "V" durch einen Thermostaten "TE" gesteuert werden kann.

12. Antrieb 94 nach einem der vorangegangenen Ansprüche, **dadurch gekennzeichnet, das** die Einschaltdauer des Nebenverbrauchers 127, 150, 132, 151a, durch aufaddieren der Umdrehungsanzahl von dem Verbrennungsmotor 22 und den Umdrehungen angetrieben durch den Elektromotor E1 22a ermittelt wird.

13. Antrieb 94 nach Anspruch 9, **dadurch gekennzeichnet, dass** die Anzahl der Umdrehungen und damit des Fördervolumens durch den dem Verbrennungsmotor zugeordnete Sensor 15 und einem am Elektromotor E1 zuordenbarer Drehzahlmesseinrichtung im Hybridsteuergerät ermittelt wird.

14. Antrieb 94 nach Anspruch 12, **dadurch gekennzeichnet, dass** dem Fahrer der Verschleiß des Filters infolge der gefilterten Luftmenge angezeigt wird.

15. Antrieb 94 nach Anspruch 12 **dadurch gekennzeichnet, daß** ein dem Druckmittelerzeuger (132, 127) nachgeschalterer Filter "F" durch das im Druckmittelbehälter "B" gespeicherte Druckmittel spül und regenerierbar ist, indem ein dem Rückschlagventil 145 zur Drucksicherung parallel angeordnetes elektromagnetisches Magnetventil 143 proportional der Förderzeit der Druckmittelerzeugers betätigbar ist.

16. Antrieb nach Anspruch 12, **dadurch gekennzeichnet, daß** die Spül- und Regenerierzeit vom im Druckmittelbehälter 148 mit dem Sensor 144 gemessenen Druck und/oder einer der gefilterten Druckmittelmenge proportionalen Regenerierzeit bestimmt wird.

17. Antrieb 94 nach Anspruch 12 **dadurch gekennzeichnet, daß** zur Berechnung der gefilterten Druckmittelmenge Faktoren welche das spezifische Fördervolumen korrigiert um den Wirkungsgrad der Verdrängermaschine 127, 132 150, 151, verwendet werden.

18. Verfahren zum Erzeugen einer maximalen Bremsleistung **dadurch gekennzeichnet, dass** durch vorrangiges paralleles Zuschalten von Nebenverbrauchem 150 wie Druckluftkompressoren 132 und/oder Kältekompressoren zum Elektromotorbremsmoment 22a durch Beeinflussung von deren vorgegebenen Schaltschwellen, der Schalttemperatur und/oder dem Schaltdruck erfolgt.

19. Verfahren nach 17 **dadurch gekennzeichnet dass** der Aufbau des Kühlcontainers oder des Kühlanhängers eines Fahrzeuges insbesonders Hybridfahrzeuges als Energiespeicher durch vorrangiges Kühlen verwendet wird.

20. Verfahren nach 17 **dadurch gekennzeichnet dass** die Fahrerkabine eines Fahrzeuges insbesonders eines Hybridfahrzeuges als Energiespeicher durch vorrangiges Kühlen verwendet wird.
